# EUROPEAN PATENT APPLICATION

(11) **EP 4 614 098 A1**
(43) Date of publication of application: **10.09.2025**
(21) Application number: 24275018.0
(22) Date of filing: 07.03.2024
(51) Int. Cl.: F28D 15/02, F28D 15/04, B33Y 80/00

(54) **HEAT TRANSFER DEVICE**

(71) Applicant: MBDA UK Limited, Stevenage, Hertfordshire SG1 2DA (GB)
(72) Inventor: The designation of the inventor has not yet been filed
(74) Representative: BAE SYSTEMS plc Group IP Department

(57) **Abstract**

A heat transfer device comprises a body, an evaporator, a condenser, a wick, a vapour duct communicating between the evaporator and the condenser, and a liquid duct communicating between the condenser and the wick. The device is arranged to define a fluid circuit for a working fluid such that, in operation with the evaporator at a relatively high temperature, and the condenser at a relatively low temperature, working fluid evaporating at the evaporator passes through the liquid duct to the condenser, working fluid condensing in the condenser passes through the liquid duct to the wick, and the wick transports working fluid received from the condenser transported towards the evaporator. The vapour and liquid ducts are provided in the body.

The device may find application in missile or aerospace applications.

## Description

### FIELD OF THE INVENTION

This invention relates to a heat transfer device. More particularly, but not exclusively, the invention relates to a heat transfer device for use in missile systems, the device having a thermal conductivity that varies in dependence on the direction of heat transfer.

### BACKGROUND

There are many systems comprising complex electronic equipment that implement increasingly demanding functions and which must often operate over considerable amounts of time. As the complexity of the requirements for electronics rise, and the amount of time over which those electronics must be operated rises, the requirements for heat generated by those electronics to be appropriately managed become more significant. Many electronic components function optimally within a limited temperature range. Heat generated by their operation must be removed if these components are to remain within that limited temperature range over an extended period of time.

In some applications, it is possible to use an environmental heat dump in certain operating conditions, but not in others. For example, in missile systems, it is possible in some circumstances for an outer skin or airframe to provide a heat dump for this generated heat. However, the missile skin can heat significantly when the missile moves at very high speeds. As a result the missile airframe can also heat significantly. In these conditions the skin becomes a source of heat, rather than a possible heat sink, and it can be necessary to insulate the electronics from the skin and airframe so that the components do not overheat. There arises a need for a heat transfer device that is suitable for use in a missile application, and that can enable one or both of the missile skin and airframe to be used as a heat dump when possible, whilst insulating the internal electronic components from excess heat when the missile is subject to frictional heating due to high speed travel.

### SUMMARY OF THE INVENTION

In accordance with a first aspect of the present invention there is provided a heat transfer device comprising a body, an evaporator, a condenser, a wick, a vapour duct communicating between the evaporator and the condenser, and a liquid duct communicating between the condenser and the wick; the device being arranged to define a fluid circuit for a working fluid such that, in operation with the evaporator at a relatively high temperature, and the condenser at a relatively low temperature, working fluid evaporating at the evaporator passes through the liquid duct to the condenser, working fluid condensing in the condenser passes through the liquid duct to the wick, and the wick transports working fluid received from the condenser transported towards the evaporator; and wherein the vapour and liquid ducts are provided in the body.

The device functions to transfer heat effectively from the evaporator side to the condenser side, as a result of movement of the working fluid through the fluid circuit. When the evaporator is relatively hot, and the condenser is relatively cold, working fluid absorbs heat by evaporation at the evaporator, and loses heat at the condenser. In this case, working fluid is effectively pumped around the fluid circuit by the temperature difference between the evaporator and the condenser, and by capillary force generated in the wick. However, when the evaporator is relatively cool, and the condenser is relatively hot, working fluid is not transported around the fluid circuit, and as a result the device exhibits effective heat transport only in one direction. Moreover, by locating the liquid and vapour duct within a body, the device is retained in a compact and robust form. Mechanical robustness is important for the device to be used in certain applications, such as aerospace applications. Particularly for missile applications, the device may be subjected to considerable mechanical forces in use, but it is also important that the device functions reliably after long periods of missile storage.

The device may have two opposed surfaces. The condenser may be provided proximate to a first of the opposed surfaces. The evaporator may be provided proximate to a second of the opposed surfaces. The opposed surfaces may be separated by a distance of between 3 mm and 100 mm. The opposed surfaces may be separated by a distance of between 3 mm and 10 mm. Such a relatively thin device is expected to be useful in a variety of applications, in particular in missile applications, as it can be more easily integrated into existing systems.

The vapour duct and the liquid duct may be arranged to transport working fluid generally perpendicularly to the opposed surfaces.

The device may further comprise a further liquid duct communicating between the condenser and the wick and a further vapour duct communicating between the evaporator and the condenser. The further liquid ducts can enhance the efficiency of heat transport. The condenser may comprise a number of condenser channels arranged such that each liquid duct communicates with each of the vapour ducts through one of the condenser channels.

The device may further comprise a reservoir for working fluid, which reservoir is in fluid communication with the wick. The reservoir may be positioned between the liquid duct and the wick, such that, in operation, working fluid from the liquid duct passes through the reservoir to reach the wick. Alternatively, the reservoir may be arranged such that in operation, working fluid passes directly from the liquid duct to the wick. The reservoir may be positioned inwardly of the wick.

One or more tesla valves may be formed in the vapour duct. The tesla valves promote unidirectional transport of the working fluid around the fluid circuit.

A structure may be provided in the liquid duct, the structure being arranged to transport working fluid in liquid form from the condenser towards the wick. Such a structure also helps to promote unidirectional transport of the working fluid around the fluid circuit. The structure may comprise a number of capillary tubes. The structure may comprise an additional wick.

The body may be a thermally insulating body. Where the device is used both to transport heat in a forward direction, but to insulate against heat transport in the reverse direction, providing a thermally insulating body enhances the insulating characteristics of the device in the reverse direction. The body may for example be constructed from a thermally insulating material. A cavity may be defined within the device, which cavity may be evacuated. Evacuating the cavity also helps to insulate against heat transport in the reverse direction.

The device may be arranged to have the form of a washer for a mechanical fastening. Such a configuration enables the device to be integrated into existing designs easily.

The condenser may comprise a number of condenser channels. Each condenser channel may follow a serpentine path.

The body may comprise an inner cylinder defining a hole through which, in use, a mechanical fastening may pass, and an outer cylinder. The liquid duct and the vapour duct may be provided as hollow ribs connecting between the inner cylinder and the outer cylinder. Such a configuration enables the device to be integrated into existing designs easily. When such a configuration is used with a further liquid duct and a further vapour duct, the device may also benefit from enhanced mechanical robustness.

The condenser and the evaporator may be joined to the body. The condenser and the evaporator may be joined to the body so as to define the cavity. The joint between the condenser and the body, and the joint between the evaporator and the body, may be a seal.

The invention extends to a missile comprising the device. The missile may comprise an outer skin, an airframe, and an electronics unit, and a thermal link between the outer skin and the electronics unit, and the device may form a part of the thermal link and be arranged such that heat can be transported from the electronics unit to the outer skin.

The device may form a part of a mechanical fastening between the outer skin and the airframe, with the device oriented such that the condenser is located towards an external side of the missile.

The device may alternatively be arranged between the electronics unit and the airframe. The device may form a part of a mechanical fastening to the airframe.

### BRIEF DESCRIPTION OF THE DRAWINGS

Embodiments of the invention will now be described by way of example only and with reference to the accompanying drawings, of which:
Figure 1 is a schematic illustration of a device according to a first embodiment of the present invention;
Figure 2 is a cut-away view of the device of Figure 1;
Figure 3 is a further cut-away view of the device of Figure 1;
Figure 4 is an exploded view of the device of Figure 1;
Figure 5 is a schematic illustration of the device of Figure 1 in use on a missile; and
Figure 6 is a cut-away view of a device according to a second embodiment of the invention.

### DETAILED DESCRIPTION

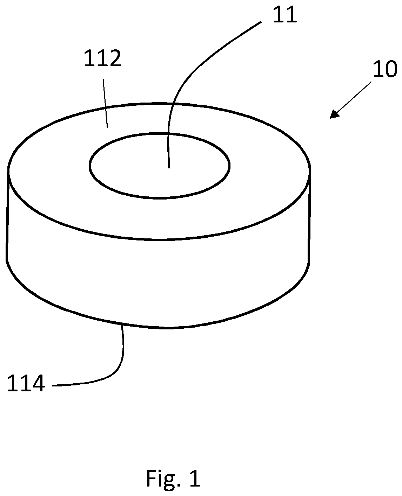

A heat transfer device 100 in accordance with a first embodiment of the invention is illustrated schematically in Figures 1 to 4. As shown in Figure 1, heat transfer device 1 is in the form of a mechanical washer, being generally cylindrical with an annular cross section, so as to define a central hole 110, and having first and second generally parallel surfaces 112, 114. As will be appreciated, in use, a bolt or other mechanical fastening may pass through the central hole to provide a fastening between first and second structures, the head of the bolt applying pressure through one of the structures on one of the parallel surfaces of the device, and the other surface of the device abutting against one of the structures. In one exemplary application, the first and second structures may be a missile airframe and a missile outer skin.

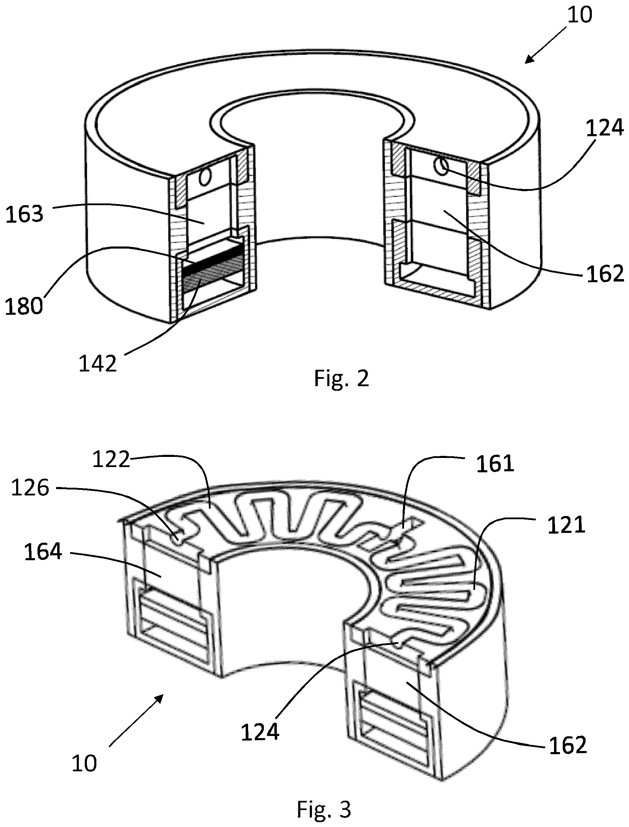

The heat transfer device 10 defines a fluid circuit for a working fluid. The fluid circuit is illustrated schematically in Figures 2 and 3, which show the heat transfer device 10 in different cut-away views. The device operates to transfer heat from surface 114 to surface 112 of the device, and comprises a condenser 12 and an evaporator 14, a wick 142, two vapour ducts 162, 164, and two liquid ducts 161, 163. The vapour ducts 162, 164 communicate between the evaporator and the condenser. In use, working fluid evaporated at the evaporator is transported through the vapour ducts 162, 164 in vapour phase to the condenser. The liquid ducts 161, 163 communicate between the condenser and the wick. In use, working fluid that has condensed in the condenser is transported through the liquid ducts in liquid phase to the wick 142.

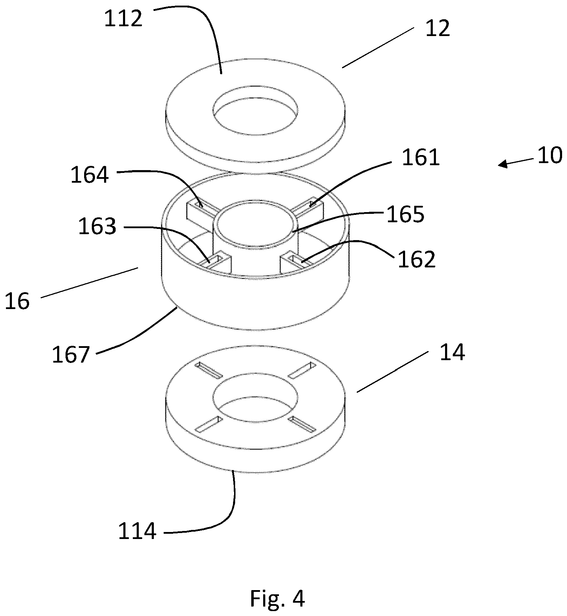

Vapour ducts 162, 164 and liquid ducts 161, 163 are formed in a body 16. Body 16 is illustrated in Figure 4, which is an exploded view of heat transfer device 100. Body 16 has the form of two concentric hollow cylinders 165, 167, with ribs connecting the two cylinders 165, 167. The ribs radially connect the two cylinders. The ribs are hollow so as to provide the vapour and liquid ducts of the fluid circuit. The ducts alternate between liquid duct and vapour duct, such that each liquid duct is separated by a 90 degree angle from its two neighbouring vapour ducts; and each vapour duct is separated by a 90 degree angle from its two neighbouring liquid ducts.

The condenser 12 defines a number of condenser channels such as channels 121, 122 illustrated in the cut-away view of Figure 3. In the present embodiment there are four condenser channels. The channels are arranged such that each of the vapour ducts communicates with each of the liquid ducts through a condenser channel. As shown in Figure 3, condenser channel 121 is arranged to receive working fluid in vapour phase at an inlet 124 from vapour duct 162. Condenser channel 122 is arranged to receive working fluid in vapour phase at an inlet 126 from vapour duct 164. Both condenser channels 121, 122 transport working fluid to outlets leading to liquid duct 161. The condenser channels follow a serpentine path within the condenser 12. The serpentine path results in an increased length of the condenser channel, and therefore a greater path length over which heat can be rejected from the working fluid through condensation.

The condenser is formed separately from the body and has a generally disk-like, annular shape that is configured to fit within outer cylinder of the body whilst abutting one end of the inner hollow cylinder and the ribs containing the liquid and vapour ducts. It is arranged so as not to impinge on central hole 11 of the device. Once attached to the body, the outer surface of the condenser provides surface 112 of the device 10.

Evaporator 14 is also formed separately from the body 16. Once attached to the body, the outer surface of the evaporator provides surface 114 of the device 10. Similarly to the condenser, the evaporator 14 has a generally disk-like, annular shape that is configured to fit within outer cylinder of the body whilst abutting one end of the inner hollow cylinder and the ribs containing the liquid and vapour ducts, without impinging on central hole 11 of the device.

Condenser 12 and evaporator 14 are joined to body 16 so as to define a cavity bounded by the inner and outer cylinders of the body, and the inner surfaces of the condenser and evaporator. This cavity is evacuated. Evacuating the cavity reduces the thermal conductivity of the device in the absence of movement of the working fluid.

The evaporator houses a wick 142 that is configured to transport working fluid as a result of capillary pressure. The wick substantially fills the evaporator, with a small gaps between its upper and lower surfaces, proximate to the ducts on one side and to surface 114 on the other. In operation, surface 114 is heated such that working fluid close to the surface evaporates, and the gap beneath the wick serves to allow the resulting vapour to pass to one of the vapour ducts 162, 164. The gap above the wick can provide a reservoir 180 for the working fluid.

In operation, the device functions to transfer heat from surface 114 to surface 112. Working fluid present at the lower side of the wick, close to surface 114 of the evaporator, will vaporise when heat is applied to the evaporator through surface 114. Heat is absorbed into the device as a result of the evaporation. The vapour phase working fluid passes from the lower part of the evaporator to one of the vapour ducts, and through the vapour duct to the opposing side of the device. The opposing side of the device houses the condenser, and the vapour phase working fluid enters a condenser channel through an inlet. The condenser side of the device is at a lower temperature than the evaporator side, and the vapour phase working fluid condenses into liquid phase working fluid at some point along the condenser channel. Liquid phase working fluid passes into a liquid duct through the condenser channel outlet, and back to the wick via the reservoir.

As working fluid is evaporated by heat applied at the evaporator, working fluid is pulled through the wick by capillary pressure, resulting in passive pumping of the working fluid around the fluid circuit. Transfer of heat energy across the device is therefore accomplished primarily by transfer of the working fluid around the fluid circuits and the phase changes in the working fluid at the evaporator and condenser, and only to a limited extent as a result of thermal conduction through the body of the device. Such transfer is can be highly efficient. However, effective thermal transfer operates only in one direction, since, if the condenser is hot and the evaporator cold, the working fluid will simply gather in its liquid phase on the evaporator side of the device. Without transport of the working fluid, thermal transfer can occur only through thermal conduction. Thermal conduction through the device itself is limited by constructing the body to have a low thermal conductivity. As described above, the body is largely hollow, which reduces its cross-sectional area, and therefore also reduces the thermal conductivity of the body.

Various fluids can be used as the working fluid in the device 10. An appropriate working fluid can be selected in dependence on the temperature range in which it is desired to effect heat transfer. The working fluid may also be selected for compatibility with the materials from which the device is made. Exemplary working fluids include water (for working temperatures between 0 and 100); ammonia (for working temperatures between -40 and 70); propylene, ethanol, and methanol, water-alcohol mixes (for working temperatures between -40 and 120); acetone, and refrigerants (such as R134a). These, and other possible working fluids, will be known to those skilled in the art.

The structures for the condenser 12, evaporator 14, and body 16 can be fabricated separately. The structures can subsequently be assembled together so as to form a seal between the condenser and the body, and between the evaporator and the body, so that the working fluid is preserved in the fluid circuit described above. The seal also enables a vacuum to be maintained in the cavity defined within the device. Each structure may for example be fabricated by additive manufacturing, such as by powder bed fusion or directed energy deposition, which is suited to construction of features such as the hollow ribs of the body, and the channels formed in the condenser. Subtractive manufacturing techniques, such as milling or laser cutting, may also be used.

In some examples, the body 16 may be fabricated from a material selected to have a low thermal conductivity. This reduces thermal conduction through the device itself, thus enhancing the directionality of heat transfer. Suitable materials for the body include ceramic, plastic or composite material, or a low thermal conductivity metal such as titanium or stainless steel. In some examples it may be that the body is made from a material selected for compatibility with the materials of the condenser and evaporator, or for compatibility with the working fluid, or for other reasons apart from ensuring low thermal conductivity. In such cases the thermal conductivity of the body can be kept low because as a result of its largely hollow structure.

The condenser and evaporator may be made from a metallic material having a higher thermal conductivity, such as copper. A relatively higher thermal conductivity supports transfer of heat to and from the opposed external surfaces 112, 114 of the device to the working fluid in the fluid circuit. The condenser and evaporator may alternatively be made from titanium, stainless steel, aluminium, or aluminium alloys.

Suitable joining techniques, such as soldering, brazing, welding, or adhesive bonding can be used in dependence on the materials used for the structures. For example, where both the body and the condenser are fabricated from titanium, the two structures can be welded or brazed together. Similarly, a titanium body can be welded or brazed to a titanium evaporator. Where the condenser or evaporator are made from a different metal, such as copper, brazing may be used. Where the body is made from a ceramic, adhesive bonding can be used to join a metallic condenser or evaporator; or the ceramic may be metal plated so that a metallic condenser or evaporator can be brazed onto the body.

The wick may for example be formed of sintered metallic powder, although many microporous structures will be suitable. Sintered copper, nickel, stainless steel or titanium can be used. In addition it is possible to use polymers such as polypropylene, polyethylene or PTFE; cork; or ceramic materials. The wick preferably has a structure with high porosity and permeability, and a fine pore radius. Its material should be selected to be compatible with the working fluid.

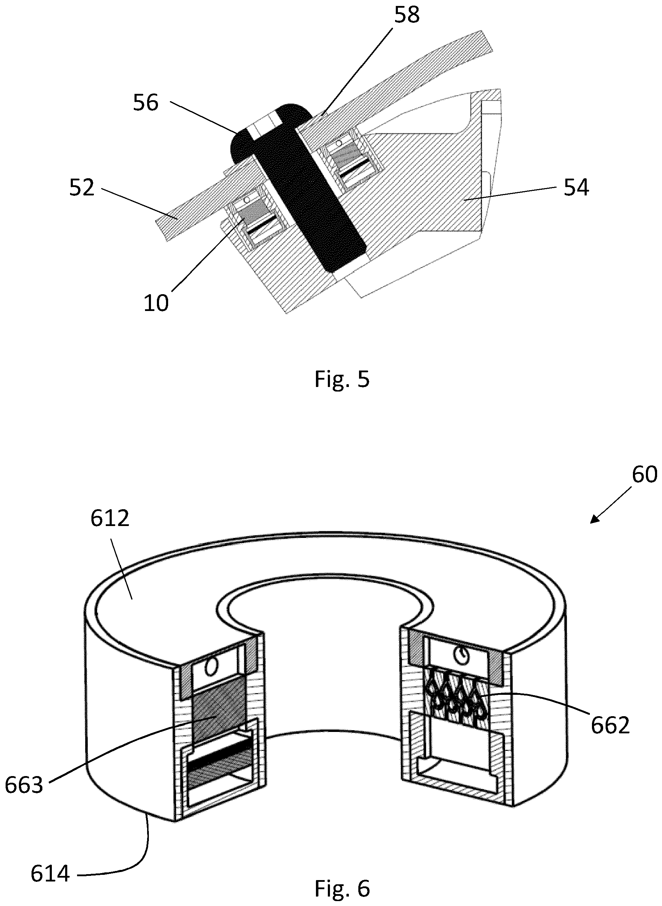

In one application, the device 10 may be used as part of a thermal link between a missile electronics unit and a missile outer skin. In many circumstances, the missile outer skin can function as an effective heat dump for excess heat generated in an electronics unit. As is illustrated schematically in Figure 5, device 10 can be used as part of a mechanical fastening between the enclosure 54 of the missile electronics unit and the missile outer skin 52. Bolt 56 passes through the central hole of device 10. The head of bolt 56 abuts against the missile outer skin, whilst the opposite end of the bolt is threaded into the enclosure 54. The device thus acts as a washer. A further washer 58 is provided between the head of the bolt 56 and the outer skin 52. In one example, suitable to function as a washer for an M4 bolt (a bolt with a 4 mm diameter), the diameter of the device is 13 mm, whilst the height of the device is 4.3 mm. Either or both of bolt 56 and washer 58 are fabricated from a thermally insulating material. This prevents heat from the skin being transported through the bolt to the enclosure 54.

The condenser side of the device 10 is positioned outwardly, in contact with the missile outer skin 52, whilst the evaporator side of the device 10 abuts the enclosure 54. In this way, effective thermal transfer is achieved from the enclosure of the electronics unit to the outer skin and the skin can act as a heat dump for the electronics unit. However, in flight, when the outer skin can become too hot to act as a heat dump (and may in certain flight conditions actually function to further heat the airframe), device 10 does not transfer heat from the outer skin to the enclosure 54, and instead helps to insulate the electronics unit from any heat generated at the outer skin.

It will be noted that, in some missile systems, the electronics unit may be fastened to an airframe which in turn is fastened to the outer skin. Typically this may be the case in larger missile systems. In such cases, the device can be positioned as part of a fastening between the outer skin and the airframe, and function in the same manner as described above, but with the airframe acting as an intermediate part in the thermal link between the outer skin and the electronics unit.

Figure 6 is a cut-away schematic illustration of an alternative heat transfer device 60 in accordance with a second embodiment of the invention. Device 60 is similar to device 10 except for the differences described below in respect of the liquid and vapour ducts. Device 60 functions to transfer heat from surface 614 to surface 612. Figure 6 shows one of the liquid ducts and one of vapour ducts. The liquid duct is provided with a wick 663, additional to the wick provided in the evaporator. The wick 663 enhances the flow of working fluid in liquid form through the liquid duct. Wick 663 can be fabricated in the same manner as described above regarding the evaporator wick, and may have the same or an alternative wicking structure to the evaporator wick. The vapour duct is provided with a number of tesla valves, as indicated at reference numeral 662. The tesla valves have a geometric shape that is configured to support fluid flow in only one direction. This helps to ensure that flow around the fluid circuit is in one direction only, thus supporting the efficiency of the device for thermal transfer. Any counter-flow can reduce the efficiency of thermal transfer from surface 614 to surface 612. The tesla valves can be formed by constructing the thermally insulating body of the device 60 using additive manufacturing techniques.

Whilst a number of specific embodiments have been described above, it will be noted that variations and modifications to the above described embodiments will be possible and apparent to those skilled in the art. For example, it will be appreciated that other heat transfer devices can be constructed in which the liquid ducts are hollow, as with device 10, but with tesla valves formed in the vapour ducts, as with device 60. Similarly, devices may be constructed with a wick in the liquid ducts, as with device 60, but with hollow vapour ducts. Whilst the presence of a wick in the liquid ducts and/or the presence of tesla valves in the vapour ducts is expected to have the beneficial effects explained above, it will also be noted that some increase in the thermal conductivity of the thermally insulating body may also be expected as a result of the additional material present in the otherwise hollow ducts. In the liquid ducts, it will also be appreciated that a number of capillary tubes, fabricated for example by additive manufacturing techniques integrally with the thermally insulating body, could be used in place a wick.

Whilst, in the above, it has been described to provide a gap on the inner side of the wick in the evaporator structure so as to form a fluid reservoir, it will be appreciated that the wick in some embodiments may fill this space, with the working fluid reservoir provided in the wick. Whilst, in the above, it has been described to provide a gap between the wick and the outer surface of the evaporator structure, so as to provide a gap for evaporated vapour to pass to the vapour ducts, it will also be appreciated that the wick may in fact contact the lower surface at some places whilst still providing a path for vaporised working fluid to pass to the vapour ducts.

It will also be appreciated that the number of liquid and vapour ducts can be varied. For example, there may only be one vapour duct and one liquid duct. Such a device may have a reduced thermal conductivity because of a lower amount of material in the thermally insulating body. Alternatively, there may be more than two liquid and vapour ducts. For example, there may be three liquid ducts and three vapour ducts, or there may be four liquid ducts and four vapour ducts. The liquid and vapour ducts may be arranged so as to support a single direction of flow for the working fluid. For example, the liquid and vapour ducts may be distributed with generally uniform angular spacing around the central hole of the device, with liquid and vapour ducts alternating. Such an arrangement may support enhanced mechanical strength of the device.

It will also be appreciated that, whilst particular dimensions have been provided for the device 10, the device can be scaled in size as appropriate for a particular application. For example, the device can be scaled to function as a washer for a bolt of 3 mm diameter (M3), a bolt of 5 mm diameter (M5), or a various other sizes of bolt. The thickness of the device may also vary. Thus, whilst in the above it has been described that the device 10 is 4.3 mm thick, it will be possible to fabricate the device to have a wide variety of thicknesses, for example in the range between 3 mm and 10 mm. The device may be fabricated to have a larger thickness, for example up to 100 mm.

Moreover, the device may be fabricated to have a different geometry. For example, the device need not be in the form of a washer and so may not have a central hole. The device may take a more rectangular form, remaining relatively thin but having two generally opposed surfaces, and a fluid circuit defined generally as described above, with ducts formed generally perpendicular to the two generally opposed surfaces. Such alternative forms may be designed to be suitable for fitting to circuit cards, either as a surface mount component, for fitting between a circuit card and an external body that can act as a heat sink in limited circumstances, or for fitting to individual circuit card components. The device may for example function as a thermal gap pad. Such devices will be of use where excess heat can be removed to an external heat dump that is effective under certain circumstances, but can become a heat source under other circumstances.

Finally, it should be clearly understood that any feature described above in relation to any one embodiment may be used alone, or in combination with other features described, and may also be used in combination with one or more features of any other of the embodiments, or any combination of any other of the embodiments.

## Claims

1. A heat transfer device comprising a body, an evaporator, a condenser, a wick, a vapour duct communicating between the evaporator and the condenser, and a liquid duct communicating between the condenser and the wick; the device being arranged to define a fluid circuit for a working fluid such that, in operation with the evaporator at a relatively high temperature, and the condenser at a relatively low temperature, working fluid evaporating at the evaporator passes through the liquid duct to the condenser, working fluid condensing in the condenser passes through the liquid duct to the wick, and the wick transports working fluid received from the condenser transported towards the evaporator; and wherein the vapour and liquid ducts are provided in the body.

2. The device of claim 1, the device having two opposed surfaces, wherein the condenser is provided proximate to a first of the opposed surfaces, and the evaporator is provided proximate to a second of the opposed surfaces.

3. The device of claim 2, wherein the vapour duct and the liquid duct are arranged to transport working fluid generally perpendicularly to the opposed surfaces.

4. The device of any one of claims 1 to 3, comprising a further liquid duct communicating between the condenser and the wick and a further vapour duct communicating between the evaporator and the condenser.

5. The device of claim 4 wherein the condenser comprises a number of condenser channels arranged such that each liquid duct communicates with each of the vapour ducts through one of the condenser channels.

6. The device of any preceding claim, further comprising a reservoir for working fluid, which reservoir is in fluid communication with the wick.

7. The device of any preceding claim, wherein one or more tesla valves are formed in the vapour duct.

8. The device of any preceding claim, wherein a structure is provided in the liquid duct, the structure being arranged to transport working fluid in liquid form from the condenser towards the wick.

9. The device of any preceding claim, wherein the body is a thermally insulating body.

10. The device of any preceding claim, wherein a cavity is defined within the device, which cavity is evacuated.

11. The device of any preceding claim, the device being arranged to have the form of a washer for a mechanical fastening.

12. The device of any preceding claim, wherein the body comprises an inner cylinder defining a hole through which, in use, a mechanical fastening may pass, and an outer cylinder, and wherein the liquid duct and the vapour duct are provided as hollow ribs connecting between the inner cylinder and the outer cylinder.

13. The device of claim 12 when dependent on claim 10, wherein the condenser and the evaporator are joined to the body so as to define the cavity.

14. A missile comprising the device of any one of the preceding claims, the missile comprising an outer skin an electronics unit, and a thermal link between the outer skin and the electronics unit, and wherein the device forms a part of the thermal link and is arranged such that heat can be transported from the electronics unit to the outer skin.
